# EUROPEAN PATENT SPECIFICATION

(11) **EP 3 052 346 B1**
(45) Date of publication and mention of the grant of the patent: **26.12.2018**
(21) Application number: 14781429.7
(22) Date of filing: 30.09.2014
(51) Int. Cl.: B60R 21/235

(54) **VACUUM ENHANCED METHOD AND APPARATUS FOR SEALING ONE OR MORE SEWN SEAMS**
VAKUUMVERSTÄRKTES VERFAHREN UND VORRICHTUNG ZUM ABDICHTEN EINER ODER MEHRERER GENÄHTER SÄUME
PROCÉDÉ RENFORCÉ SOUS VIDE ET APPAREIL D'ÉTANCHÉIFICATION D'UNE OU PLUSIEURS COUTURES COUSUES

(30) Priority: 30.09.2013 US 201361884269 P
(43) Date of publication of application: 10.08.2016
(73) Proprietor: Key Safety Systems, Inc., Sterling Heights, MI 48314 (US)
(72) Inventor: KALANDEK, Bruce, Dearborn, Michigan 48124 (US)
(74) Representative: Gislon, Gabriele
(86) International application number: PCT/US2014/058179
(87) International publication number: WO 2015/048706

(56) References cited:
- DE-A1- 19 852 232
- JP-A- H04 197 848
- JP-A- H05 238 342
- US-B1- 6 886 857

## Description

### Background And Summary Of The Invention

The present invention relates to a method and related apparatus to reduce or completely negate gas flow through a sewn seam and a manufactured article made by said method.

JPH04 197848A discloses an airbag consisting of two sheets of base materials. The outer edges of said base materials are sewn together and a sealing material is applied to the upper surface side of the sewn portion, while the lower surface side of said suture portion is being sucked. In this manner, if an air reservoir is formed between the sealant and the airbag substrate, the air is sucked from the stich of the suture thread and disappears. After completing the vacuum application, the sealant firmly remains on the upper surface of the airbag sheet where it was applied. The airbag is then turned upside down and sealant is applied on the other side.

More specifically the invention comprises an improved method of sealing a sewn seam as defined in claim 1. Furthermore, the invention relates to an improved article as defined in claim 10.

### Brief Description of the Drawings

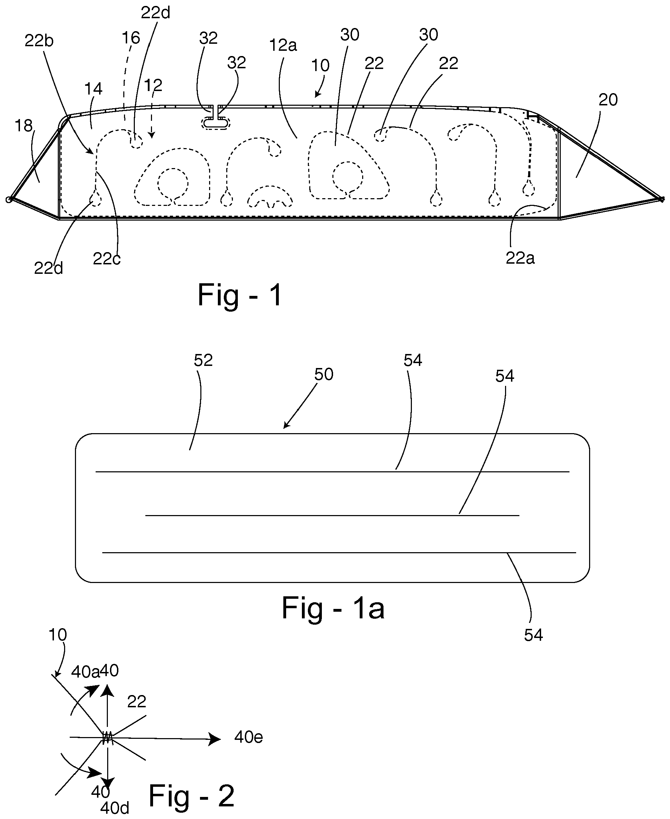

Figure 1 shows a typical curtain airbag having a plurality of sewn seams.
Figure 1 a shows an inflatable mattress with a plurality of sewn seams.
Figure 2 shows typical leak paths relevant to an airbag having a sewn seam.
Figure 3 shows an exemplary, simplified airbag, useful in explaining the benefits of the present invention.
Figure 3a shows an exemplary air bag with a center path terminating at end coil, loop, or oval sections.
Figure 4 shows sealant applied to one of the seams of the airbag of figure 3.
Figure 5 shows a work table useable with the present invention.
Figure 5a is a cross-sectional view taken through section 5a-5a of figure 5.
Figure 5b shows vacuum applied to sealant.
Figure 6 shows the migration of seam sealant after the application of vacuum, the two sewn together layers of material are moved apart for the purpose of illustration.
Figure 7 shows the present invention applied to more than two layers of material.
Figure 8 shows an alternate construction of a work table and in particular the construction of grooves with raised sides.
Figure 8a shows the airbag draped about a section of groove with raised sides.
Figure 8b shows the template atop the airbag with the raised walls of the groove extending into a cutaway portion of the template.
Figure 8c shows a template or guide with portions cut away designed to be placed atop the airbag which has been placed upon the work table.
Figure 8d adds to figure 8c a solvent applicator which is pictured about to add solvent to the airbag.
Figure 8e shows a quantity of sealant being application to fabric.
Figure 8f shows a piece of fabric under vacuum pressure.
Figure 8g shows an alternate embodiment of side walls of a groove.
Figure 8h shows an alternate sealant applicator.

### Detailed Description of the Drawings

Figure 1 shows a somewhat conventional sewn-together curtain airbag 10. The airbag comprises a central inflatable region 12 formed by sewing two panels of material 14 and 16 together. Airbag 10 further includes a non-inflatable linking panel 18, which is used to connect one side of the airbag to an anchor point such as a vehicle pillar and additionally includes another non-inflatable linking panel 20 to connect the other side of the airbag to another vehicle pillar. The inflatable region 12 is subdivided into a plurality of inflatable regions 12a by selectively creating sewn seams 22 to join panels 14 and 16 together. Some of the sewn seams 22 are configured to create non-inflatable regions 30 within the airbag 10. The airbag 10 is configured to include at least one or more inlets 32 through which inflation gas can be provided from an inflator to inflate the airbag. One of the seams 22a is a peripheral seam, another seam 22b shows a center path 22c terminating at end coil, loop, or oval sections 22d.

Figure 2 shows the location of the leak paths in a sewn-together airbag. When the airbag is pressurized inflation gas can leak out of the material forming the inflatable region 12 as illustrated by arrows 40a and 40b. In practice these leak paths through the airbag material can be eliminated or reduced by coating the woven airbag material with a known sealant such as silicon. Also, such leak paths can also be reduced using uncoated woven material using thin denier thread and by increasing the weave density of the thread. Sewn-together airbags are known to have leak paths through the needle holes created in the joining together of the panels; these paths are shown by arrows 40c and 40d. Further, as the airbag is inflated the sewn seam 22 is stressed creating another leak path between the panels of material and across the thread forming this sewn seam. This additional leak path is shown by arrow 40e. Airbags such as the one illustrated in figure 1 may also include a peripheral sewn seam 22a extending along some or all sides of the airbag which of course creates a variety of leak paths through each needle hole. The present invention shows proven methodology to reduce and/or eliminate each of the above leak paths.

Reference is briefly made to figure 1a which illustrates an inflatable mattress 50 which has a structure similar to that of the sewn-together airbag. For example, mattress 50 includes one or more inflatable regions 52 filled with air or some other gas. These inflatable regions can be formed by sewn-together seems 54 which will exhibit leak paths. Figure 1a is provided to illustrate the present invention can be used on different types of inflatable devices.

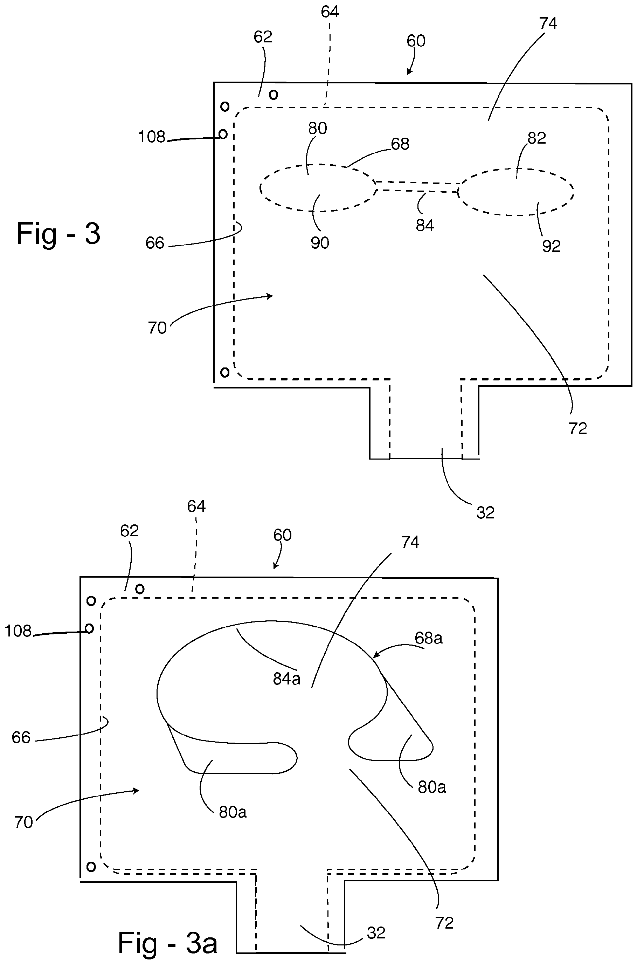

Reference is now made to figure 3 and 3a which represents an exemplary airbag 60 useful in explaining the present method and related apparatus. Airbag 60, as with airbag 10, is formed by sewing together opposing panels of material 62 and 64. These panels of material can be formed as separate pieces of material or these panels can be formed by folding over a large piece of material into, for example, two halves wherein each half forms one of the panels. Airbag 60 includes a peripheral seam 66 and an interior seam 68 (68a in fig 3a) which separates inflatable regions 70 into subregions 72 and 74. The interior seam 68 by way of example comprises oval sew seams 80 and 82 joined by a rectangular section 84. These various seams 80, 82 and 84 create noninflatable regions 90 and 92. Airbag 60 also includes a neck region or area 32 similar to airbag 10. In figure 3a the interior seam 68a includes a center path 84a terminating at end coil, loop, or oval sections 80a.

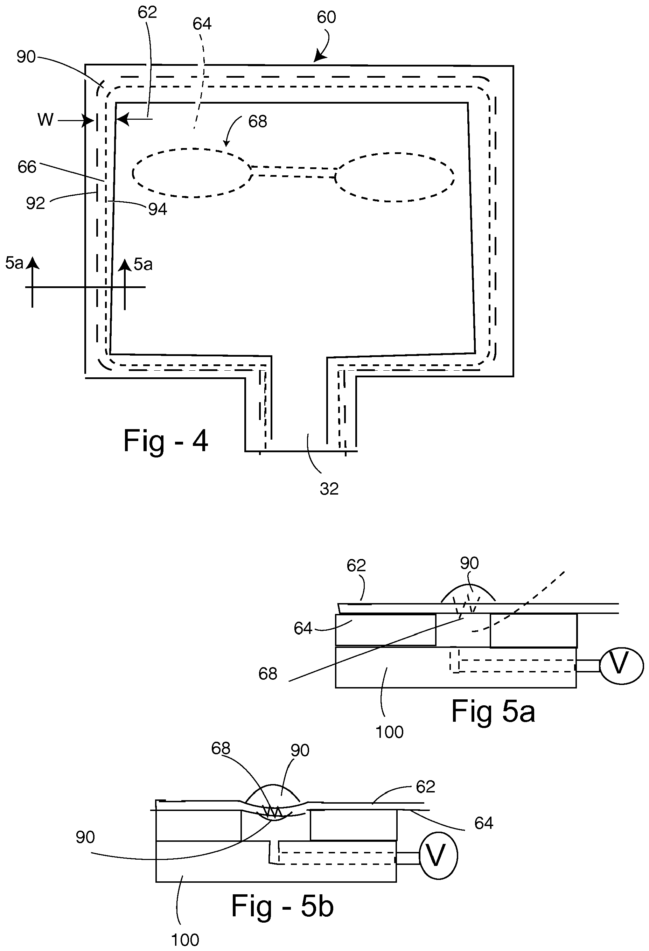

Figure 4 illustrates airbag 60. In addition, figure 4 shows a band of sealant material 90 has been applied to the peripheral seam 66. In the preferred embodiment, the sealant material 90 when it is applied to the airbag material is in a semi-liquid condition with a specified viscosity or within viscous range of 50 to 200,000 cP (0.05 Pa.s to 200 Pa.s) (as tested under ASTM D1084). This viscosity can range up 2 million cP if circumstances allow for it. The viscosity range will vary with parameters such as seam thread characteristics, needle and needle hole size, application temperature and humidity, the width W of the sealant material 90 is shown by the distance between phantom lines 92 and 94. The thread seam in each of the one or more rows has 12 to 20 stitches per inch (4.7 stitches per cm to 8.0 stitches per cm), preferably, the number of stitches is 14 to 18 per inch (5.5 to 7.0 stitches per cm). The threads can be coated with a coating compatible to bond with the seam coating material. The seam thread has a denier in the range of 92 to 202 preferably about 138. Furthermore, it is understood that the weave of the cloth material should be in an equivalent range commonly used in any curtain airbag. Typically, these airbag industry fabrics range from 210 denier all the way up to, but not exclusive to 840 denier. For example, a typical exemplary seam would use a minimum of 25 grams/meter of coating material. The width W of the sealant 90 may be just sufficient to cover the seam thread and needle holes to a much larger width in the range of about 6 to 8 mm. It should be appreciated figure 4 only shows the sealant 90 applied to seam 66; subsequently, the sealant is applied to each of the seams 68 and its subparts 80, 82 and 84 (and 68a, 80a and 84a). As will be seen from the discussion below, subsequent to application of sealant to the seam vacuum is applied drawing the seam sealant through the seam from one panel to the other panel or panels. When the sealant is cured the gas flow through the seam is reduced or eliminated.

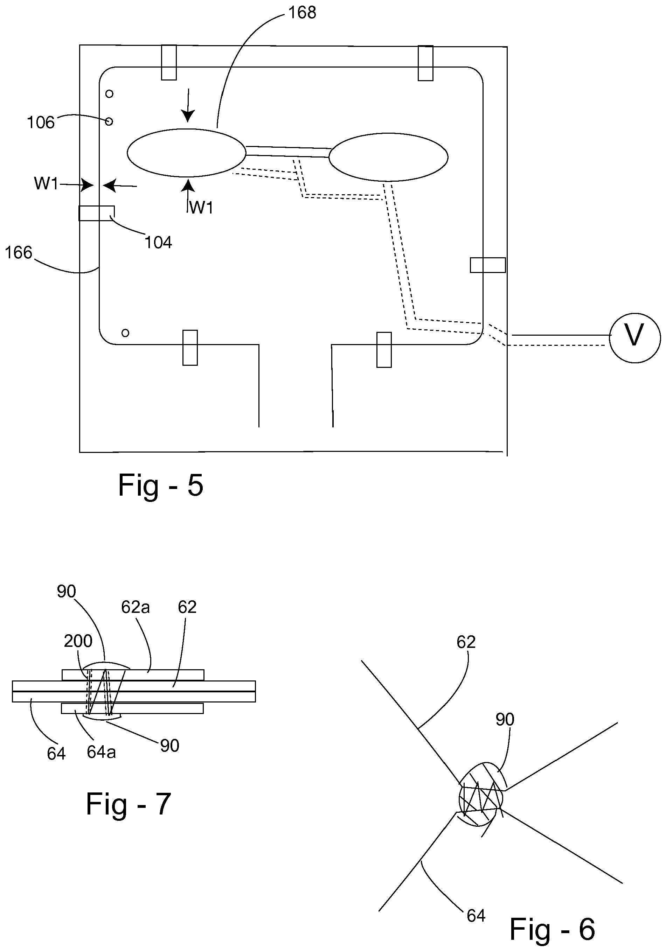

Figure 5 shows a work table 100 for use with the present invention. The table includes a top or material receiving surface 102 upon which the airbag to be processed can be laid and help in place. The airbag is not shown in figure 5. Formed on the top surface 102 is a plurality of grooves or channels such as 166, 168. The relative location of each groove corresponds to the placement of each seam on the airbag 60. Each groove is communicated to a vacuum source 110 though passages such as 112 and 114. The width W1 of the grooves 166, and 168 is sufficiently wide to span the underside of the sewn seam and to permit the sealant to be drawn through the layers of material to the lowest exposed surface of material. In practice the width of the grooves can be in the range of about 6-10 mm. The work table 100 includes a means for securing the airbag 60 to the surface 102 of the table 100. For example, this means may include clamps diagrammatically shown as 104 which grab upon the selvage edges of the bag. Alternately this means may include a plurality of pins 106 which enter into a like number of holes 108, see figure 3a or 3a, also located in the selvage edges of the bag. Other securing means or mechanisms can be used with the present invention. As can be appreciated the sealant 90 can be applied to the bag 60 prior to the bag being secured to the table or alternatively the bag 60 can be secured to the table 100 and then the sealant applied to the bag.

The sealant 90 can be applied to the bag by any appropriate method. For example the sealant can be applied using a tube such as a caulking tube, or by spaying, or by using a roller or specially formed applicator or other means.

Figure 5a shows a section of seam 66 covered by the sealant 90 with the airbag 60 placed and secured upon table 100 and seam 68 positioned above groove 166. Upon activation of vacuum source V, sealant 90 is drawn through the layers of fabric, through the needle holes 200. Figure 5b shows the vacuum applied to the airbag above the groove and sealant causing the airbag to be drawn into the groove. While the section line mentioned above was taken through the peripheral seam 66, had that cross-section been take through any of the seams in figures 3 or 3a they would look substantially the same. Figure 6 shows the sealant drawn through to the lower exposed surface of the sewn-together layers of fabric. The level of vacuum will vary with the size of the needle holes 200, see figure 7, and with the viscosity of the sealant 90, and whether the bag is sealed or unsealed. A good estimate is the vacuum level required is in a range of 2.5 cm (1 inch) to 35 cm (14 inches) of Mercury

Reference is briefly made to figure 7 in which the sealing process is applied to four (4) layers of material. In this figure the sealant 90 is initially applied to the top or first exposed layer of material and is drawn through to the last or opposite or remote exterior surface of material.

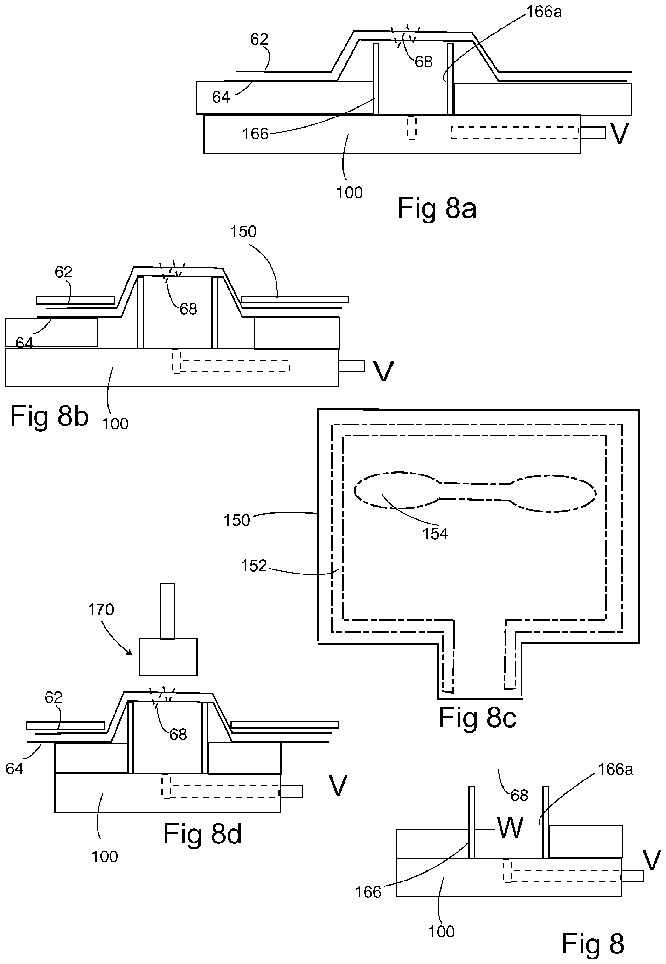

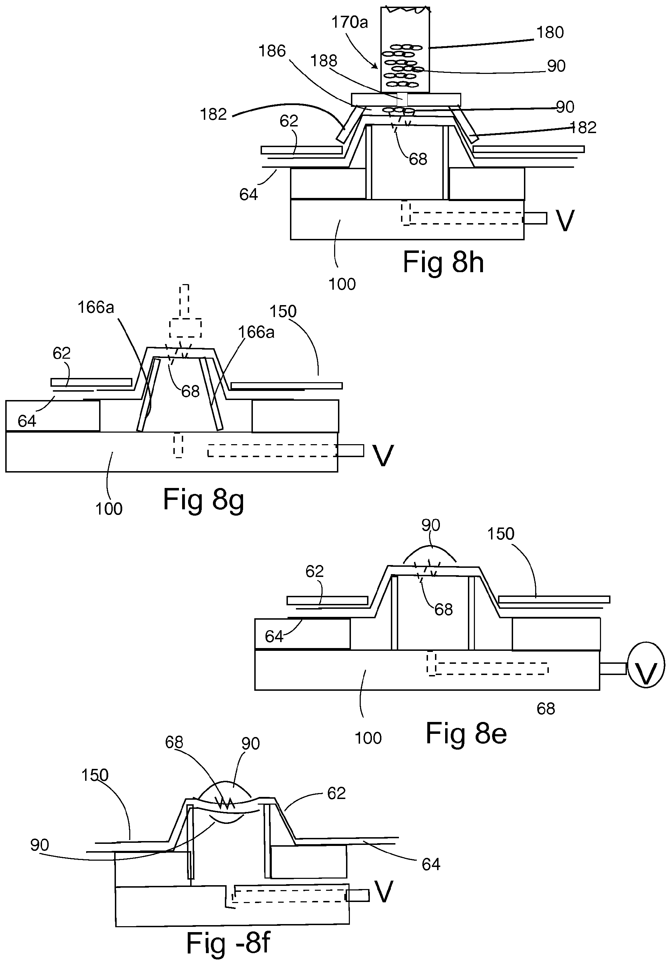

Reference is made to figures 5 and 8. As previously mentioned figure 5 is a top view of a work table wherein the solid lines show the layout of a plurality of grooves. Figure 8 is another cross-sectional view through groove 166 and additionally shows an alternate embodiment with a plurality of raised groove walls 166a. In figure 8a airbag 60 is draped over the plurality of raised walls which include 166a. As needed the airbag will be secured to the edges of the work table using appropriate clamps, tie downs, pins etc. If any of the seams discussed above were draped upon the raised walls of figure 8a, the view would look substantially the same.

Figure 8c shows a template or guide 150 which shows a plurality of cutouts 152 and 154. As shown in figure 8b, cutout 152 is sufficiently wide to be placed over each raised wall 166a and by its weight, or by vacuum force which pulls the template 160 down or by a pushing force which also pushes template 150 down which causes a portion of the airbag material to closely adhere to the exterior of the raised wall 166a. In doing so a seam such as 68, or other seam, is positioned within the space defined by the opposed raised walls 166a. In this manner sealant 90 can be applied to a relatively narrow swath or width of airbag material about the seams such as seam 68. Figure 8d shows a sealant applicator 170 positioned just above seam 68 prior to the introduction of sealant 90 that defined the width of the airbag material between the elevated walls 166a. The other cutout 154 is positioned above sewn seams 66 and 68.

Reference is briefly made to figure 8e which shows the quantity of sealant 90 applied between the raised walls 166a. In figure 8f the vacuum source V has been activated drawing the sealant 90 from the first or top exposed surface through to the lower or opposite exposed surface of the airbag material. As previously mentioned one of the benefits of utilizing a groove with raised walls 166 as well as the other raised walls is that it enables the application of sealant upon the airbag material located between the respective raised walls. Figure 8g shows an alternate embodiment of the invention in which the raised walls 166a as well as the other raised walls are directed inward. If using this construction, the spacing between the tops of the walls is narrower, thereby enabling the application sealant to a smaller surface area than illustrated.

Figure 8h shows an alternate applicator 170a relative to the one shown in figure 8d. Here this applicator 170a includes a bottle 180 in which is a quantity of sealant 90. The applicator 170a includes sloped walls 182 and 182 which apply a downward force on the airbag material forces it against the raised walls 166 and creates a pocket 186 for a small quantity of sealant 92 to be applied to the seam 68. Sealant enters the pocket 196 through a small passage 188. The bottle 180 can be pressurized or the sealant can leave the bottle under the force of gravity. Thereafter, vacuum is applied in the manner as mentioned above.

Many changes and modifications in the above-described embodiment of the invention can, of course, be carried out without departing from the scope thereof. Accordingly, that scope is intended to be limited only by the scope of the appended claims.

## Claims

1. An improved method of sealing a sewn seam (66, 68) comprising the steps of:
a) creating a sewn seam (66, 68) with the use of thread in multiple panels of material, the seam extending from a first exposed surface of one of the panels of material (62) to an opposite exposed surface in a remote panel of material (64);
b) applying a seam sealant (90) to an exposed portion of the seam (66, 68) on the first exposed surface;
c) locally applying a pressure differential to the opposite exposed surface proximate the seam (66, 68) on this surface,
d) removing the pressure differential; and
e) curing the sealant (90), thereby sealing the sewn seam (66, 68) across the multiple panels (62, 64),
**characterized in that** said pressure differential is able to urge the seam sealant (90) to migrate along the thread from the first exposed surface to regions between the panels (62,64), to the second opposite exposed surface of the remote panel of material (64) and drawing the sealant (90) onto said opposite exposed surface in the remote panel of material (64).

2. The method according to claim 1 wherein the step of applying a pressure differential includes applying a vacuum at a determinable level to the second exposed surface.

3. The method according to claim 2 wherein the level of vacuum applied is in the range of about 2.5 cm to 35 cm (1 to 14 inches) of vacuum.

4. The method according to claim 1 wherein the step of applying a seam sealant (90) to the seam (66, 68) includes applying the seam sealant (90) to adjacent portions of the first exposed surface.

5. The method according to claim 4 wherein seam sealant (90) is applied in a band of about 6 mm.

6. The method according to claim 1 wherein the method includes the step of locally elevating those portions of the material having a seam (66, 68) relative to portions of the material without the seam prior to the step of applying the seam sealant (90) and wherein the step of applying the seam sealant (90) includes applying sealant to those elevated portions of material having the seam (66, 68).

7. The method according to claim 1 including the additional step of applying sealant (90) to the second exposed surface after removal of the pressure differential.

8. The method according to claim 1 wherein the step of creating a sewn seam (66, 68) includes creating a sewn seam in panels of woven material wherein one or both panels of material (62, 64) include: uncoated material, woven material coated wholly or partially with a coating material or a plastic sheet.

9. The method according to claim 1 wherein the steps of applying a seam sealant (90) and locally applying a pressure differential are done relatively concurrently.

10. An improved article of manufacture made with sealed sewn seams made by the method of claim 1, wherein the article is an airbag (60).

11. The airbag of claim 10 wherein the airbag (60) has multiple panels of material (62, 62a, 64, 64a) sewn together with the use of threads creating sewn seams (66, 68); and
wherein a seam sealant (90) is applied on an exposed portion of the seam (66, 68) which passes through the seam between the multiple panels to a second exposed surface to form a complete sealed seam sealing all thread holes (200).

12. The airbag of claim 11 wherein the multiple panels (62, 62a, 64, 64a) have a fabric denier in the range of 210 to 840.

13. The airbag of claim 12 wherein the seam threads have a denier in the range of 92 to 202, preferably about 138.

14. The airbag of claim 11 wherein the sealant (90) is applied using a minimum of 25 grams/meter.

15. The airbag of claim 11 wherein the seam (66, 68) has one or more rows of threads, each row having stitches in the range of 12 to 20 per inch (4.7 to 8.0 stitches per cm), preferably each row has 14 to 18 stitches per inch (5.5 to 7 stitches per cm).

## Patentansprüche

1. Verbessertes Verfahren zum Abdichten einer genähten Naht (66, 68), das die folgenden Schritte umfasst:
a) Erzeugen einer genähten Naht (66, 68) mit der Verwendung eines Fadens in mehreren Materialtafeln, wobei sich die Naht von einer ersten freigelegten Fläche einer der Materialtafeln (62) zu einer entgegengesetzten freigelegten Fläche in einer entfernten Materialtafel (64) erstreckt,
b) Aufbringen eines Nahtabdichtungsmittels (90) auf einen freigelegten Abschnitt der Naht (66, 68) auf der ersten freigelegten Fläche,
c) örtliches Anlegen eines Druckunterschiedes an die entgegengesetzte freigelegte Fläche nahe der Naht (66, 68) auf dieser Fläche,
d) Wegnehmen des Druckunterschiedes und
e) Aushärten des Abdichtungsmittels (90), wodurch die genähte Naht (66, 68) durch die mehreren Tafeln (62, 64) abgedichtet wird,
**dadurch gekennzeichnet, dass** der Druckunterschied dazu in der Lage ist, das Nahtabdichtungsmittel (90) zu drängen, entlang des Fadens von der ersten freigelegten Fläche zu Bereichen zwischen den Tafeln (62, 64), zu der zweiten entgegengesetzten freigelegten Fläche der entfernten Materialtafel (64) zu wandern, und das Abdichtungsmittel (90) auf die entgegengesetzte freigelegte Fläche in der entfernten Materialtafel (64) zu ziehen.

2. Verfahren nach Anspruch 1, wobei der Schritt des Anlegens eines Druckunterschiedes das Anlegen eines Unterdrucks mit einem bestimmbaren Niveau an die entgegengesetzte freigelegte Fläche einschließt.

3. Verfahren nach Anspruch 2, wobei das Niveau des angelegten Unterdrucks in dem Bereich von etwa 2,5 cm bis 35 cm (1 bis 14 Zoll) Unterdruck liegt.

4. Verfahren nach Anspruch 1, wobei der Schritt des Aufbringens eines Nahtabdichtungsmittels (90) auf die Naht (66, 68) das Aufbringen des Nahtabdichtungsmittels (90) auf benachbarte Abschnitte der ersten freigelegten Fläche einschließt.

5. Verfahren nach Anspruch 4, wobei das Nahtabdichtungsmittel (90) in einem Band von etwa 6 mm aufgebracht wird.

6. Verfahren nach Anspruch 1, wobei das Verfahren den Schritt des örtlichen Anhebens derjenigen Abschnitte des Materials, die eine Naht (66, 68) aufweisen, im Verhältnis zu Abschnitten des Materials ohne die Naht vor dem Schritt des Aufbringens des Nahtabdichtungsmittels (90) einschließt und wobei der Schritt des Aufbringens des Nahtabdichtungsmittels (90) das Aufbringen von Abdichtungsmittel auf diejenigen Abschnitte des Material, die eine Naht (66, 68) aufweisen, einschließt.

7. Verfahren nach Anspruch 1, das den zusätzlichen Schritt des Aufbringens von Nahtabdichtungsmittel (90) auf die zweite freigelegte Fläche nach dem Wegnehmen des Druckunterschiedes einschließt.

8. Verfahren nach Anspruch 1, wobei der Schritt des Erzeugens einer genähten Naht (66, 68) das Erzeugen einer genähten Naht in Tafeln eines gewebten Material einschließt, wobei eine oder beide Materialtafeln (62, 64) Folgendes einschließen: unbeschichtetes Material, gewebtes Material, das vollständig oder teilweise mit einem Beschichtungsmaterial oder einer Kunststoff-Folie beschichtet ist.

9. Verfahren nach Anspruch 1, wobei die Schritte des Aufbringens eines Nahtabdichtungsmittels (90) und des örtlichen Anlegens eines Druckunterschiedes verhältnismäßig gleichzeitig vorgenommen werden.

10. Verbesserter Fertigungsartikel, der mit abgedichteten genähten Nähten hergestellt ist, die durch das Verfahren nach Anspruch 1 hergestellt sind, wobei der Artikel ein Airbag (60) ist.

11. Airbag nach Anspruch 10, wobei der Airbag (60) mehrere Materialtafeln (62, 62a, 64, 64a) aufweist, die mit der Verwendung von Fäden zusammengenäht sind, die genähte Nähte (66, 68) erzeugen, und
wobei ein Nachtabdichtungsmittel (90) auf einen freigelegten Abschnitt der Naht (66, 68) aufgebracht ist, das durch die Naht zwischen den mehreren Tafeln zu einer zweiten freigelegten Fläche hindurchgeht, um eine vollständige abgedichtete Naht zu bilden, wobei alle Fadenlöcher (200) abgedichtet sind.

12. Airbag nach Anspruch 11, wobei die mehreren Tafeln (62, 62a, 64, 64a) einen Gewebe-Denierwert in dem Bereich von 210 bis 840 aufweisen.

13. Airbag nach Anspruch 12, wobei die Nahtfäden einen Denierwert in dem Bereich von 92 bis 202, vorzugsweise etwa 138, aufweisen.

14. Airbag nach Anspruch 11, wobei das Abdichtungsmittel (90) unter Verwendung eines Minimums von 25 Gramm/Meter aufgebracht wird.

15. Airbag nach Anspruch 11, wobei die Naht (66, 68) eine oder mehrere Reihen von Fäden aufweist, wobei jede Reihe Stiche in dem Bereich von 12 bis 20 je Zoll (4,7 bis 8,0 Stiche je cm) aufweist, wobei vorzugsweise jede Reihe 14 bis 18 Stiche je Zoll (5,5 bis 7 Stiche je cm) aufweist.

## Revendications

1. Procédé amélioré pour sceller une couture cousue (66, 68), comprenant les étapes ci-dessous :
a) formation d'une couture cousue (66, 68) par l'intermédiaire d'un fil dans de multiples panneaux de matériau, la couture s'étendant d'une première surface exposée de l'un des panneaux de matériau (62) vers une surface exposée opposée dans un panneau de matériau distant (64) ;
b) application d'un produit de scellement de la couture (90) sur une partie exposée de la couture (66, 68) sur la première surface exposée ;
c) application locale d'une différence de pression sur la surface exposée opposée proche de la couture (66, 68) sur cette surface ;
d) suppression de la différence de pression ; et
e) durcissement du produit de scellement (90) pour sceller ainsi la couture cousue (66, 68) à travers les multiples panneaux (62, 64) ;
**caractérisé en ce que** ladite différence de pression est capable d'entraîner le produit de scellement de la couture (90) à migrer le long du fil, de la première surface exposée vers les régions situées entre les panneaux (62, 64), vers la deuxième surface exposée opposée du panneau de matériau distant (64) et application du produit de scellement (90) sur ladite surface exposée opposée dans le panneau de matériau distant (64).

2. Procédé selon la revendication 1, dans lequel l'étape d'application d'une différence de pression inclut l'application d'un vide, à un niveau pouvant être déterminé, sur la deuxième surface exposée.

3. Procédé selon la revendication 2, dans lequel le niveau du vide appliqué est compris dans l'intervalle allant d'environ 2,5 cm à 35 cm (1 à 14 pouces) de vide.

4. Procédé selon la revendication 1, dans lequel l'étape d'application d'un produit de scellement de la couture (90) sur la couture (66 ; 68) inclut l'application du produit de scellement de la couture (90) sur des parties adjacentes de la première surface exposée.

5. Procédé selon la revendication 4, dans lequel le produit de scellement de la couture (90) est appliqué dans une bande d'environ 6 mm.

6. Procédé selon la revendication 1, dans lequel le procédé inclut l'étape d'élévation locale des parties du matériau comportant une couture (66, 68) par rapport à des parties du matériau ne comportant pas de couture avant l'étape d'application du produit de scellement de la couture (90), et dans lequel l'étape d'application du produit de scellement de la couture (90) inclut l'application de produit de scellement sur ces parties élevées du matériau comportant la couture (66, 68).

7. Procédé selon la revendication 1, incluant l'étape additionnelle d'application du produit de scellement (90) sur la deuxième surface exposée après la suppression de la différence de pression.

8. Procédé selon la revendication 1, dans lequel l'étape de formation d'une couture cousue (66, 68) inclut la formation d'une couture cousue dans des panneaux de matériau tissé, dans lequel un ou les deux panneaux de matériau (62, 64) incluent : du matériau non revêtu, du matériau tissé revêtu entièrement ou en partie d'un matériau de revêtement ou d'une feuille plastique.

9. Procédé selon la revendication 1, dans lequel les étapes d'application d'un produit de scellement de la couture (90) et d'application locale d'une différence de pression sont effectuées de manière relativement simultanée.

10. Article de fabrication amélioré fabriqué avec des coutures cousues scellées selon le procédé de la revendication 1, dans lequel l'article est un coussin d'air (60).

11. Coussin d'air selon la revendication 1, dans lequel le coussin d'air (60) comporte de multiples panneaux de matériau (62, 62a, 64, 64a) assemblés par couture par l'intermédiaire de fils formant les coutures cousues (66, 68) ; et
dans lequel un produit de scellement des coutures (90) est appliqué sur une partie exposée de la couture (66, 68) passant à travers la couture entre les multiples panneaux, vers une deuxième partie exposée pour former une couture scellée complète, scellant tous les trous de fils (200).

12. Coussin d'air selon la revendication 11, dans lequel les multiples panneaux (62, 62a, 64, 64a) présentent un denier compris dans l'intervalle allant de 210 à 840.

13. Coussin d'air selon la revendication 12, dans lequel les fils de la couture présentent un denier compris dans l'intervalle allant de 92 à 202, correspondant de préférence à environ 138.

14. Coussin d'air selon la revendication 11, dans lequel le produit de scellement (90) est appliqué en utilisant un minimum de 25 grammes/mètre.

15. Coussin d'air selon la revendication 11, dans lequel la couture (66, 68) comporte une ou plusieurs rangées de fils, chaque rangée comportant un nombre de points de couture compris dans l'intervalle allant de 12 à 20 par pouce (4,7 à 8,0 points de couture par cm), chaque rangée comportant de préférence 14 à 18 points de couture par pouce (5,5 à 7 points de couture par cm).
